## Europäisches Patentamt
## European Patent Office
## Office européen des brevets

(11) Numéro de publication: **0 039 268**
**B1**

(12) **FASCICULE DE BREVET EUROPEEN**

(45) Date de publication du fascicule du brevet:
03.10.84

(51) Int. Cl.³: **B 29 F 1/10,** A 43 D 65/00

(21) Numéro de dépôt: **81400580.7**

(22) Date de dépôt: **10.04.81**

(54) **Moule pour la fabrication d'une semelle à crampons de chaussure de sport.**

(30) Priorité: **28.04.80 FR 8009538**

(43) Date de publication de la demande:
**04.11.81 Bulletin 81/44**

(45) Mention de la délivrance du brevet:
**03.10.84 Bulletin 84/40**

(84) Etats contractants désignés:
**BE CH DE GB IT LI NL SE**

(56) Documents cités:
**CH - A - 351 396**
**FR - A - 1 516 032**
**FR - A - 2 300 515**
**US - A - 3 486 249**
**US - A - 3 559 308**
**US - A - 4 123 488**

(73) Titulaire: **PATRICK S.A. Société dite, F-85700 Pouzauges (FR)**

(72) Inventeur: **Beneteau, Charles Marie, Les Bourochelies, F-85700-Pouzauges (FR)**

(74) Mandataire: **Caunet, Jean et al, Cabinet BEAU DE LOMENIE 55, rue d'Amsterdam, F-75008 Paris (FR)**

## Description

La présente invention concerne un moule en deux parties ouvrantes pour la fabrication d'une semelle à crampons de chaussure de sport, notamment de football, de rugby ou autres.

Une première technique connue consiste à surmouler la semelle sur la tige en faisant venir, lors de la même injection et avec la même matière plastique, les crampons. La chaussure se trouve terminée avec un nombre minimal d'opérations, mais la semelle ne possède pas les meilleures qualités requises pour le jeu de balle au pied en raison des impératifs liés au surmoulage.

Une deuxième technique connue fait appel à une fabrication séparée de la tige et de la semelle qui sont ensuite réunies par collage, cette opération finale accroissant le coût de la chaussure et la durée de fabrication. Mais la semelle peut alors être réalisée dans de meilleures conditions et ses propriétés peuvent, par conséquent, être mieux adaptées que précédemment aux sollicitations qu'elle subit et à l'assistance qu'elle doit porter au pied du joueur. Cependant, pour que la semelle proprement dite possède la souplesse souhaitée, il est évident que les crampons, du fait qu'ils sont injectés en même temps et avec la même matière, ne présentent pas la dureté et la résistance à l'abrasion les mieux appropriées à l'usage.

Une troisième technique connue réside, comme la précédente, en une fabrication séparée de la tige et de la semelle, mais avec une semelle exempte de crampons. Ceux-ci sont généralement métalliques et vissables dans des embases rapportées après moulage sur la face interne de ladite semelle. Dès lors, la semelle peut être souple et les crampons peuvent être durs et résistants à l'usure. Mais la fixation ultérieure des embases et le montage des crampons constituent des opérations supplémentaires relativement longues et onéreuses; de plus, ces pièces rapportées entraînant un accroissement de poids auquel le joueur est sensible.

La présente invention a pour but de mettre au point une technique nouvelle qui réunisse les avantages des deux précédentes, à savoir de réussir la fabrication, lors d'une opération unique de moulage, d'une semelle à crampons en assurant une solidité de liaison parfaite entre la partie souple de la semelle et la partie dure et résistante à l'abrasion des crampons.

Le brevet US no 3 559 308 décrit une semelle à pointes, de préférence pour chaussures de golf. La semelle est en matière plastique surmoulée sur la tête et le corps des pointes métalliques. La technique de sa fabrication s'apparente à la troisième décrite dans ce qui précède, mais le moule délimite dans la première de ses parties ouvrantes des trous et comporte dans sa deuxième partie ouvrante des poussoirs situés en regard pour maintenir en place dans la cavité interne dudit moule les pointes en pressant leur épaulement qui relie leur corps à leur extrémité saillante contre le siège formé par le bord desdits trous à travers lesquels celle-ci s'étend.

Pour adapter cette technique à une chaussure dans laquelle les pointes métalliques sont remplacées par des têtes de crampons plastiques, il faut que les trous de la première partie ouvrante du moule soient conformés en empreintes pour le moulage des amorces de crampons en même temps que la semelle proprement dite et prolongés par des logements, dans lesquels sont maintenues en place par les poussoirs les têtes de crampons préalablement moulées en une autre matière plastique et destinées à se souder aux amorces lors du moulage de ladite semelle.

La présente invention a pour but d'améliorer la solidité de la jonction des têtes de crampons avec les amorces et concomitamment le positionnement de ces têtes dans le moule. Elle vise aussi à améliorer la qualité du moulage en évitant la formation de bulles dues aux retassures à l'endroit des amorces de crampons.

Dans l'invention, la première partie du moule, définissant la surface inférieure de la semelle, présente des empreintes à crampons, tandis que la deuxième partie du moule, définissant la surface supérieure de la semelle, comporte des poussoirs pour maintenir en place, lors de la fermeture du moule, les têtes de crampons.

Conformément à l'invention, chaque poussoir coopère avec un manchon de guidage solidaire de la tête de crampon correspondante, ce manchon permettant en outre d'accroître la surface de soudure de la matière de la semelle sur celle des têtes de crampons.

De plus, certains au moins des poussoirs peuvent présenter une section dissymétrique permettant d'orienter automatiquement les têtes de crampons correspondantes.

En outre, la deuxième partie du moule présente en saillie des bossages situés en regard des empreintes et conjugués avec les poussoirs précités.

Divers autres caractéristiques et avantages de l'invention ressortent d'ailleurs de la description détaillée qui suit.

Une forme de réalisation du moule de l'invention et des variantes sont représentées, à titre d'exemples non limitatifs, sur le dessin annexé.

Sur ce dessin:

la fig. 1 est un plan vu de dessous d'une semelle conforme à l'invention;

la fig. 2 est une coupe partielle prise à plus grande échelle suivant la ligne II–II de la fig. 1 et montrant la semelle dans le moule en position de fermeture;

la fig. 3 est une vue analogue à la fig. 2 illustrant, à plus grande échelle encore, une variante d'exécution d'un tel moule en position d'ouverture;

la fig. 4 est une vue partielle analogue à la fig. 2 se rapportant à une autre variante d'exécution;

la fig. 5 est une coupe transversale prise suivant la ligne V–V de la fig. 4.

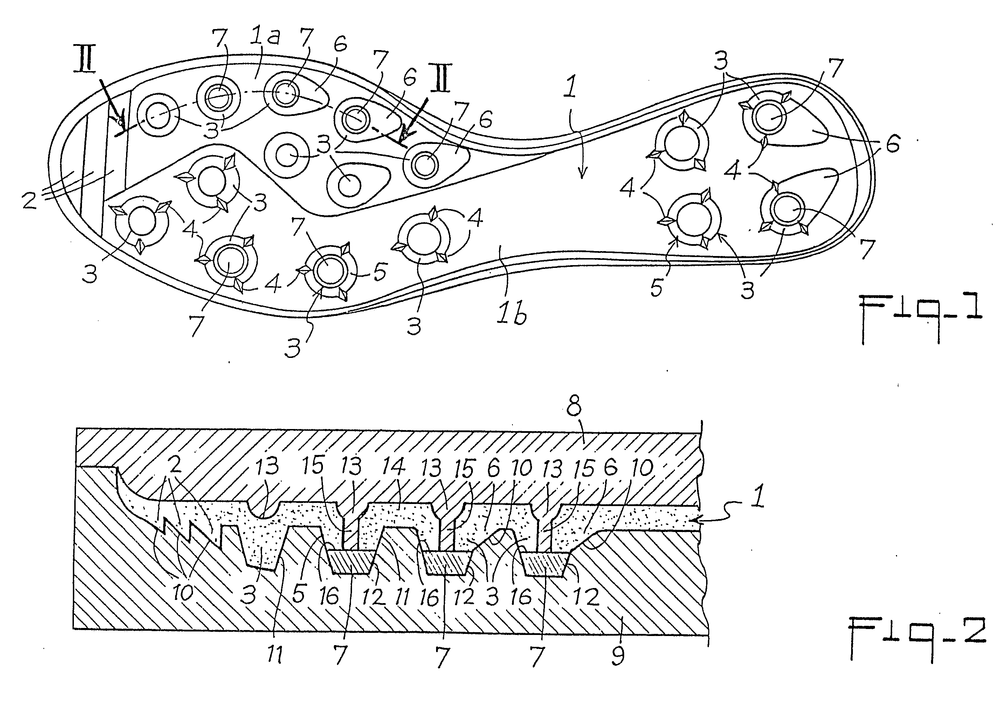

Telle qu'elle est extraite de son moule de fabrication, la semelle 1 (fig. 1) est en une matière plastique souple de même nature et de même composition dans toute sa masse. Sa partie intérieure avant 1a, d'aspect lisse et brillant, est un peu plus épaisse que sa partie restante 1b, d'aspect mat et granité. Son bout antérieur présente en saillie des dents transversales d'accrochage 2 dont le profil est dissymétrique: pente en avant et épaulement en arrière.

Des crampons 3 sont venus de moulage avec la semelle. Mais, ainsi que cela ressort clairement de la fig. 1, leur implantation n'est pas quelconque. Des essais ont permis de déterminer leur répartition, leur situation, leur nombre, leur grosseur, leur hauteur, leur forme, la perpendicularité ou l'inclinaison de leur axe, l'assiette de leur tête, la présence ou non de nervures de raidissement 4, le choix d'une emplanture conique 5 ou oblongue et rejetée en arrière 6, etc.

Indépendamment du choix judicieux de ces paramètres, l'expérience montre que certains crampons doivent posséder une tête 7 très dure et résistante à l'abrasion.

La fabrication d'une telle semelle est effectuée dans un moule illustré par les figs 2 à 5 et comportant deux parties ouvrantes 8 et 9 dites supérieure et inférieure, car elles définissent les surfaces de dessus et de dessous respectivement de la semelle. Cette dénomination n'implique évidemment pas que le moule doit être utilisé horizontalement puisqu'il peut l'être dans n'importe quelle position.

La partie inférieure 9 délimite des empreintes 10 et 11 conformées en correspondance avec les dents 2 et les crampons 3 respectivement. Les empreintes 11 des crampons à tête dure 7 sont prolongées par des logements récepteurs 12 prévus pour recevoir les têtes correspondantes. Celles-ci doivent s'adapter parfaitement auxdits logements afin que la matière plastique souple injectée dans le moule, pour former la semelle, ne puisse pas s'infiltrer entre la paroi des logements et les têtes.

La partie supérieure 8 présente des bossages 13 situés en regard des empreintes 11 et faisant saillie dans la cavité de moulage 14 pour alléger les crampons sans pour autant les affaiblir. Les bossages 13 conjugués avec les logements 12 sont solidaires de poussoirs 15 qui, lorsque les deux parties 8 et 9 du moule sont fermées, permettent de presser les têtes 7 contre la paroi latérale et le fond des logements 12 et de les maintenir en place positivement dans ceux-ci, en s'opposant alors définitivement à toute tentative d'infiltration.

Lorsque la matière plastique souple est injectée dans la cavité de moulage 14, elle pénètre dans les empreintes 11 et réchauffe les têtes 7 en matière plastique dure, en ramollissant au moins la zone superficielle de contact 16 et en assurant ainsi une soudure particulièrement efficace par accrochage chimique ou fusion des deux matières dans cette zone.

Bien entendu, lors du démoulage, l'extraction des poussoirs 15 laisse subsister dans les crampons 3 des trous d'allégement 17.

La surface annulaire de soudage 16 est suffisante, compte tenu des contraintes de liaison engendrées, pour assurer une solidarisation efficace et solide des têtes 7 avec les crampons 3.

Cependant, cette surface peut être accrue en prévoyant sur chaque tête 7 un manchon saillant 18 (fig. 3); celui-ci coopère alors avec le poussoir correspondant 15 pour permettre son centrage et son guidage lors de la fermeture du moule. La solidarisation est donc effectuée par le siège annulaire 16 de la tête considérée et par la surface latérale 19 perpendiculaire du manchon 18; d'ailleurs, celui-ci peut conférer au crampon une rigidité relative à la flexion qui peut être intéressante en contrôlant concomitamment la souplesse du corps de ce crampon.

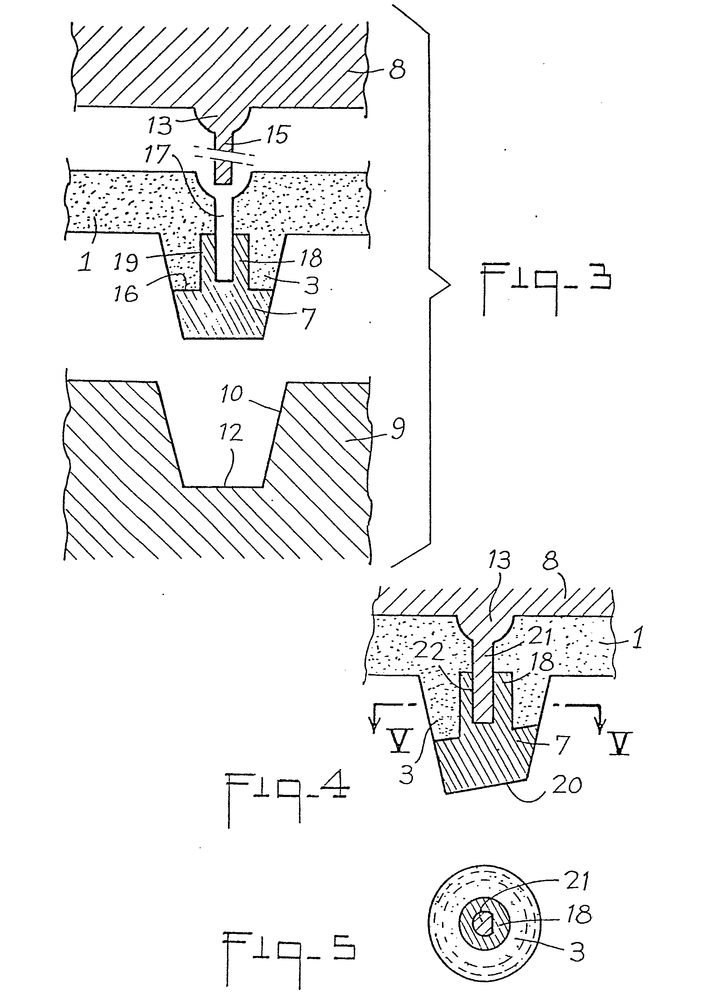

Par ailleurs, et ainsi que le montrent les figures 4 et 5, chaque poussoir peut être utilisé pour orienter convenablement la tête lorsque l'axe de symétrie du crampon conjugué, s'il existe, ne correspond pas avec l'axe de ce poussoir; cela se produit, par exemple, lorsque le crampon est incliné et/ou que la surface 20 d'appui au sol de sa tête est pentue (fig. 4). Dans ce cas, le poussoir 21 présente une section dissymétrique telle que circulaire avec méplat (fig. 5), et il en est de même pour le trou du manchon 22.

Dans l'exposé qui précède, il est indiqué que le poussoir 15 ou 21 est solidaire des bossages 13 de la partie supérieure 8 du moule. Mais il est bien évident que ledit poussoir peut être guidé en translation relativement à cette partie et repoussé, pour saillir, par un ressort suffisamment puissant.

L'invention n'est pas limitée à la forme de réalisation représentée et décrite en détail, car diverses modifications peuvent y être apportées sans sortir de son cadre.

**Revendications**

1. Moule en deux parties ouvrantes pour la fabrication d'une semelle à crampons de chaussure de sport, par surmoulage d'une matière plastique souple constituant sur la semelle proprement dite les crampons qui sont en une matière plastique dure, la première partie (9) du moule qui définit la surface inférieure de la semelle présentant des empreintes (5) à crampons (3) tandis que la deuxième partie (8) du moule qui définit la surface supérieure de la semelle comporte des poussoirs (15) pour maintenir en place, lors de la fermeture du moule, les têtes de crampons, caractérisé en ce que chaque poussoir (15) coopère avec un manchon de guidage (18) solidaire de la tête de crampon (7) correspondante, ce manchon permettant en outre d'accroître la surface de soudure de la matière plastique de la semelle sur celle des têtes de crampons.

2. Moule selon la revendication 1, caractérisé en ce que certains au moins des poussoirs (21) présentent une section dissymétrique permettant d'orienter automatiquement les têtes de crampons (7) correspondantes.

3. Moule selon la revendication 1 ou 2, caractérisé en ce que la deuxième partie du moule présente en saillie des bossages (13) situés en regard des empreintes (5) et conjugués avec les poussoirs (15) précités.

**Claims**

1. Mold in two opening parts for the manufacture of a spiked sole for sport shoes, by molding over the sole proper a supple plastic material constituting the spikes which are made of hard plastic material, the first part (9) of the mold defining the lower surface of the sole having prints (5) with spikes (3) whereas the second part (8) of the mould defining the upper surface of the sole comprises push-rods (15) to keep the spike heads in position when closing the mold, characterized in that each push-rod (15) cooperates with a guiding sleeve (18) integral with the corresponding spike head (7), this sleeve further enabling to increase the welding surface of the plastic material of the sole on that of the spike heads.

2. Mold according to claim 1, characterized in that at least some of the push-rods (21) have an asymmetrical cross-section enabling to automatically direct the corresponding spike heads (7).

3. Mold according to claim 1 or 2, characterized in that the second part of the mold has bosses (13) situated opposite the prints (5) and conjugated with the above-mentioned push-rods (15).

**Patentansprüche**

1. Form aus zwei aufgehenden Teilen zur Herstellung einer Sohle mit Spikes für Sportschuhe durch Giessen eines nachgiebigen Plastikmaterials, das die aus hartem Plastikmaterial hergestellten Spikes auf der eigentlichen Sohle aufbaut, wobei der erste, die Unterseite der Sohle festlegende Teil (9) der Form Vertiefungen (5) mit Spikes (3) aufweist, während der zweite, die Oberseite der Sohle festlegende Teil (8) der Form Stössel (15) zum Inlagehalten der Spikespitzen bei Schliessen der Form umfasst, dadurch gekennzeichnet, dass jeder Stössel (15) mit einer mit der entsprechenden Spikespitze (7) verbundenen Führungsmuffe (18) zusammenwirkt, welche Muffe weiter ein Anwachsen der Schweissfläche des Plastikmaterials der Sohle auf jener der Spikespitzen gestattet.

2. Form nach Anspruch 1, dadurch gekennzeichnet, dass zumindest einige der Stössel (21) asymmetrischen Querschnitt haben, der ein automatisches Ausrichten der entsprechenden Spikespitzen (7) gestattet.

3. Form nach Anspruch 1 oder 2, dadurch gekennzeichnet, dass der zweite Teil der Form vorspringende Buckel (13) aufweist, die gegenüber den Vertiefungen angeordnet und mit den Stösseln (15) verbunden sind.

Fig-1

Fig-2

0 039 268

Fig-3

Fig-4

Fig-5